# EUROPEAN PATENT APPLICATION

(11) **EP 4 397 486 A1**
(43) Date of publication of application: **10.07.2024**
(21) Application number: 22869952.6
(22) Date of filing: 12.09.2022
(51) Int. Cl.: B32B 27/10, B32B 9/00, B32B 27/00, B65D 65/40

(54) **EASILY OPENABLE PACKAGING MATERIAL AND PACKAGING BAG**

(30) Priority: 16.09.2021 JP 2021151466
(71) Applicant: Toppan Holdings Inc., Tokyo 110-0016 (JP)
(72) Inventor: ISHII, Rika, Tokyo 110-0016 (JP); KAMINAGA, Junichi, Tokyo 110-0016 (JP); KOSHIYAMA, Yoshiki, Tokyo 110-0016 (JP); KOJIMA, Yumiko, Tokyo 110-0016 (JP); WAKABAYASHI, Hiroyuki, Tokyo 110-0016 (JP)
(74) Representative: TBK
(86) International application number: PCT/JP2022/034093
(87) International publication number: WO 2023/042805

(57) **Abstract**

An easily openable packaging material according to the present disclosure is a packaging material having a laminated structure including a paper base material, an anchor coat layer, a vapor deposition layer of a metal or a metal oxide, and a sealant layer in this order, in which the weight of the paper base material is 50% by mass or more based on the entirety of the packaging material, the thickness of the sealant layer is 2 to 40 µm, the sealant layer includes a first polyolefin-based resin, and the tensile strength at break is 40 to 70 N/15 mm.

## Description

### Technical Field

The present disclosure relates to an easily openable packaging material and a packaging bag.

### Background Art

In recent years, as environmental awareness is increasing due to issues such as the problem of marine plastic waste, there has been a growing momentum to move away from plastics. Even in the field of packaging materials, there is a strongly growing demand for replacing packaging materials made of plastics with packaging materials made of paper. In order to suppress permeation of water vapor and the like that degrade the quality of the contents, packaging materials having gas barrier properties are used.

Patent Literature 1 discloses a packaging material in which a paper base material, an adhesive layer including a specific material, a metal layer in contact with the adhesive layer, and a sealant layer are laminated in this order, and the thickness of the adhesive layer is in a specific range. Patent Literature 2 discloses a packaging material in which a paper base material, an adhesive layer in contact with the paper base material, and a sealant layer are laminated in this order, and in which the arithmetic mean roughness of the paper base material and the tensile strength of the packaging material satisfy a specific conditional expression.

### Citation List

### Patent Literature

Patent Literature 1: Japanese Unexamined Patent Publication No. 2020-116880
Patent Literature 2: Japanese Unexamined Patent Publication No. 2020-49913

### Summary of Invention

### Technical Problem

However, it has been revealed by an investigation conducted by the inventors of the present invention that the packaging materials disclosed in the above-described Patent Literatures 1 and 2 have poor tearability in a case where the packaging materials do not have a notch. In addition, it has been revealed by the inventors of the present invention that in the packaging materials disclosed in the above-described in Patent Literatures 1 and 2, the fibers of the paper base material have orientation properties; however, in a case where the direction of tear is not along the direction of orientation of the fibers of the paper base material, the packaging material has poor tearability.

Furthermore, from the standpoint of the Law for Promotion of Effective Utilization of Resources, it has been required to reduce the quantity of plastic materials used in the packaging materials.

The present disclosure provides an easily openable packaging material and a packaging bag, which have excellent tearability regardless of the direction of tear even when no notch is provided, have excellent water vapor barrier properties, and are environmentally friendly.

### Solution to Problem

An easily openable packaging material according to an aspect of the present disclosure is a packaging material having a laminated structure including a paper base material, an anchor coat layer, a vapor deposition layer of a metal or a metal oxide, and a sealant layer in this order, in which a weight of the paper base material is 50% by mass or more based on an entirety of the packaging material, a thickness of the sealant layer is 2 to 40 µm, the sealant layer includes a first polyolefin-based resin, and a tensile strength at break is 40 to 70 N/15 mm.

The first polyolefin-based resin may have at least one selected from the group consisting of a carboxyl group and a salt of a carboxyl group.

The thickness of the sealant layer may be 2 to 20 µm.

The easily openable packaging material may further include an adhesive layer between the vapor deposition layer and the sealant layer.

The easily openable packaging material may further include an overcoat layer between the vapor deposition layer and the adhesive layer, and the overcoat layer may include a second polyolefin-based resin having at least one selected from the group consisting of a carboxyl group and a salt of a carboxyl group.

The anchor coat layer may include a third polyolefin-based resin having at least one selected from the group consisting of a carboxyl group and a salt of a carboxyl group.

The anchor coat layer may include a polyvinyl alcohol-based resin.

Another aspect of the present disclosure may be a packaging bag including the above-described easily openable packaging material.

The packaging bag may have a folded part.

### Advantageous Effects of Invention

According to the present disclosure, an easily openable packaging material and a packaging bag, which have excellent tearability regardless of the direction of tear even when no notch is provided, have excellent water vapor barrier properties, and are environmentally friendly.

### Brief Description of Drawings

FIG. 1 is a schematic cross-sectional view illustrating an easily openable packaging material according to an embodiment of the present disclosure.
FIG. 2 is a schematic cross-sectional view illustrating an easily openable packaging material according to another embodiment of the present disclosure.
FIG. 3 is a perspective view illustrating a packaging bag according to an embodiment of the present disclosure.

### Description of Embodiments

Hereinafter, embodiments of the present disclosure will be described in detail with reference to the drawings as appropriate. However, the present disclosure is not intended to be limited to the following embodiments.

### <Easily openable packaging material>

### {First embodiment}

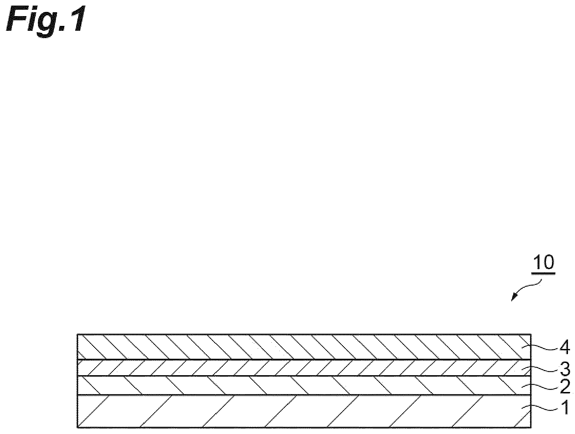

An easily openable packaging material according to a first embodiment will be described below. FIG. 1 is a schematic cross-sectional view illustrating a packaging material according to the first embodiment. The packaging material 10 according to an embodiment has a laminated structure including a paper base material 1, an anchor coat layer 2, a vapor deposition layer 3, and a sealant layer 4 in this order.

### [Paper base material]

The paper base material 1 is not particularly limited and may be selected as appropriate according to the use application of the packaging bag to which the packaging material 10 is applied. The paper base material 1 is not particularly limited as long as it is a paper containing pulp derived from plants as a main component. Specific examples of the paper base material 1 include high-quality paper, special high-quality paper, coated paper, art paper, cast coated paper, imitation vellum paper, kraft paper, and glassine paper. From the viewpoint of having even more excellent tearability, the basis weight of the paper base material 1 may be, for example, 20 g/m² or more, 30 g/m² or more, 35 g/m² or more, or 40 g/m² or more, and may be 500 g/m² or less, 300 g/m² or less, or 100 g/m² or less.

The paper base material 1 may be provided with a coat layer at least on the side in contact with the anchor coat layer 2 that will be described below. By providing a coat layer, the anchor coat layer can be prevented from seeping into the paper, the coat layer can also serve as a filling for filling up the surface unevenness of paper, and the anchor coat layer can be formed uniformly without defects. In the coat layer, for example, various copolymers such as a styrene-butadiene-based copolymer, a styrene-acrylic copolymer, and an ethylene-vinyl acetate-based copolymer, a polyvinyl alcohol-based resin, a cellulose-based resin, and paraffin (WAX) may be used as a binder resin, and clay, kaolin, calcium carbonate, talc, mica, and the like may be included as a filler.

The thickness of the coat layer is not particularly limited; however, for example, the thickness may be 1 to 10 µm or may be 3 to 8 µm.

When the weight of the paper base material 1 is 50% by mass or more based on the entirety of the packaging material, the packaging material 10 has excellent tearability regardless of the direction of tear even when no notch is provided. In addition, the quantity of plastic materials used can be sufficiently reduced, the packaging material can be entirely made of paper, and at the same time, the packaging material has excellent recyclability. From a similar viewpoint, the weight of the paper base material is preferably 60% by mass or more, more preferably 70% by mass or more, and even more preferably 80% by mass or more.

From the viewpoint of having excellent tearability regardless of the direction of tear even when no notch is provided, it is preferable that the fibers included in the paper base material 1 are non-oriented.

### [Anchor coat layer]

The anchor coat layer 2 is provided on the surface of the paper base material 1 and is provided to improve the tight adhesiveness between the paper base material 1 and the vapor deposition layer 3 that will be described below, and to improve the gas barrier properties of the packaging material. The material of the anchor coat layer 2 is not particularly limited; however, examples thereof include a polyurethane-based resin, a polyvinyl alcohol-based resin, and a third polyolefin-based resin having a polar group.

When the anchor coat layer 2 includes a polyurethane-based resin, the anchor coat layer 2 has excellent coating stability due to good wettability, and the tight adhesiveness between the paper base material 1 and the vapor deposition layer 3 is improved. In addition, since the surface smoothness of the anchor coat layer 2 is improved, the vapor deposition layer 3 is likely to be formed densely, and the gas barrier properties are further improved. By using a polyurethane-based resin having gas barrier properties, further improvement of the gas barrier properties can also be expected.

From the viewpoint of barrier properties, it is preferable that the polyurethane-based resin contains at least one of a meta-xylylene diisocyanate-derived constituent unit or a hydrogenated meta-xylylene diisocyanate-derived constituent unit. When the polyurethane-based resin contains such a constituent unit, high cohesive force is exhibited due to hydrogen bonding and a stacking effect of xylylene moieties, the gas barrier properties tend to be more excellent. Regarding a coating liquid used at the time of forming an anchor coat layer including a polyurethane-based resin, from the viewpoint of coating properties, a coating liquid dispersed in water, such as a dispersion or an emulsion, is preferable. Examples of such a coating liquid include TAKELAC WPB manufactured by Mitsui Chemicals, Inc.

When the anchor coat layer 2 includes a third polyolefin-based resin, it is possible to form a dense film due to the crystallinity of the polyolefin, and water vapor barrier properties are exhibited. Water vapor barrier properties are exhibited due to the crystallinity of the polyolefin, and since the third polyolefin-based resin has a polar group, tight adhesion to the vapor deposition layer 3 is exhibited.

The third polyolefin-based resin may have at least one selected from the group consisting of a carboxyl group, a salt of a carboxyl group, a carboxylic acid anhydride group, and a carboxylic acid ester.

As the third polyolefin-based resin, a product obtained by copolymerizing ethylene or propylene with an unsaturated carboxylic acid (an unsaturated compound having a carboxyl group, such as acrylic acid, methacrylic acid, or maleic anhydride) or an unsaturated carboxylic acid ester, a salt obtained by neutralizing a carboxylic acid with a basic compound, and the like may be used, and in addition to those, a product obtained by copolymerizing ethylene or propylene with vinyl acetate, an epoxy-based compound, a chlorine-based compound, a urethane-based compound, a polyamide-based compound, or the like may also be used.

Specific examples of the third polyolefin-based resin include a copolymer of an acrylic acid ester and maleic anhydride, an ethylene-vinyl acetate copolymer, and an ethylene-glycidyl methacrylate copolymer.

Examples of the polyvinyl alcohol-based resin include a fully saponified polyvinyl alcohol resin, a partially saponified polyvinyl alcohol resin, a modified polyvinyl alcohol resin, and an ethylene-vinyl alcohol copolymer resin. Furthermore, the degree of polymerization of the polyvinyl alcohol-based resin is preferably 300 or more and 1700 or less. When the degree of polymerization is 300 or more, the gas barrier properties and bending resistance of the packaging material are improved, and when the degree of polymerization is 1700 or less, the viscosity of the coating liquid of the polyvinyl alcohol-based resin that will be described below is lowered, and coating properties are improved.

In a case where the anchor coat layer 2 includes a polyvinyl alcohol-based resin, the anchor coat layer 2 has excellent flexibility, can suppress cracking of the vapor deposition layer 3 after being bent (after being folded), can suppress deterioration of the gas barrier properties, and at the same time, can improve the tight adhesiveness between the vapor deposition layer 3 and the anchor coat layer 2.

The anchor coat layer 2 may include other components in addition to the polyurethane-based resin, the third polyolefin-based resin, and the polyvinyl alcohol-based resin. Examples of the other components include a polyolefin-based resin other than the third polyolefin-based resin, a silane coupling agent, an organic titanate, a polyacrylic, a polyester, a polyurethane, a polycarbonate, a polyurea, a polyamide, a polyimide, melamine, and phenol.

The content of the polyurethane-based resin in the anchor coat layer 2 may be, for example, 50% by mass or more, may be 70% by mass or more, may be 90% by mass or more, or may be 100% by mass.

The content of the third polyolefin-based resin in the anchor coat layer 2 may be, for example, 50% by mass or more, may be 70% by mass or more, may be 90% by mass or more, or may be 100% by mass.

The content of the polyvinyl alcohol-based resin in the anchor coat layer 2 may be, for example, 50% by mass or more, may be 70% by mass or more, may be 90% by mass or more, or may be 100% by mass.

The thickness of the anchor coat layer 2 may be, for example, 1 µm or more, may be 2 µm or more, may be 20 µm or less, may be 10 µm or less, or may be 5 µm or less. When the thickness of the anchor coat layer 2 is 1 µm or more, the surface unevenness of the paper base material 1 can be efficiently filled up, and the vapor deposition layer 3 can be laminated uniformly. In addition, when the thickness of the anchor coat layer 2 is 20 µm or less, the vapor deposition layer 3 can be laminated uniformly while suppressing cost.

Regarding a method for providing an anchor coat layer 2, a method of applying a coating liquid including at least a material for forming an anchor coat layer and a solvent on a paper base material and drying the coating liquid may be mentioned. In a case where the anchor coat layer 2 includes the third polyolefin-based resin, it is desirable that the third polyolefin-based resin in the coating liquid has a smaller particle size. The particle size is not particularly limited; however, the particle size is preferably 0.1 to 0.7 µm. When the particle size is small, the anchor coat layer 2 has excellent smoothness, and as a result, the vapor deposition layer 3 to be formed tends to be uniform with less variation in thickness. As a result, the packaging material 10 tends to have further improved gas barrier properties.

Examples of the solvent that is included in the coating liquid of the anchor coat layer 2 include water, methyl alcohol, ethyl alcohol, isopropyl alcohol, n-propyl alcohol, n-butyl alcohol, n-pentyl alcohol, dimethyl sulfoxide, dimethylformamide, dimethylacetamide, toluene, hexane, heptane, cyclohexane, acetone, methyl ethyl ketone, diethyl ether, dioxane, tetrahydrofuran, ethyl acetate, and butyl acetate. These solvents may be used singly, or two or more kinds thereof may be used in combination. Among these, from the viewpoint of characteristics, methyl alcohol, ethyl alcohol, isopropyl alcohol, toluene, ethyl acetate, methyl ethyl ketone, and water are preferred. Furthermore, from an environmental viewpoint, methyl alcohol, ethyl alcohol, isopropyl alcohol, and water are preferred.

### [Vapor deposition layer]

A vapor deposition layer 3 is a layer obtained by vapor-depositing an inorganic oxide, a metal, or a metal oxide. The vapor deposition layer may be obtained by vapor-depositing silica, may be obtained by vapor-depositing aluminum, or may include aluminum oxide (AlOₓ) or the like.

The thickness of the vapor deposition layer 3 may be set as appropriate according to the use application; however, the thickness may be preferably 10 nm or more, 30 nm or more, or 50 nm or more, and may be 300 nm or less, 100 nm or less, or 80 nm or less. When the thickness of the vapor deposition layer 3 is set to 10 nm or more, the continuity of the vapor deposition layer 3 is likely to be sufficient, and when the thickness is set to 300 nm or less, the occurrence of curls and cracks can be sufficiently suppressed, while sufficient gas barrier performance and flexibility are easily achieved.

From the viewpoints of oxygen gas barrier performance and film uniformity, it is preferable that the vapor deposition layer 3 is formed by vacuum film-forming means. Examples of the film-forming means include known methods such as a vacuum vapor deposition method, a sputtering method, and a chemical vapor deposition method (CVD method), and from the viewpoints of a fast film-forming rate and high productivity, a vacuum vapor deposition method is preferred. Furthermore, among vacuum vapor deposition methods, particularly film-forming means based on electron beam heating is effective because it is easy to control the film-forming rate by adjusting the irradiation area, electron beam current, and the like, and an increase in temperature and a decrease in temperature to the vapor deposition material can be carried out in a short period of time.

### [Sealant layer]

A sealant layer 4 is provided on the surface of the vapor deposition layer 3 so as to be in contact with the vapor deposition layer 3. The thickness of the sealant layer 4 is 2 to 40 µm. The sealant layer 4 includes a first polyolefin-based resin. The first polyolefin-based resin has a polar group.

As the sealant layer 4 includes the first polyolefin-based resin, it is possible to form a dense film due to the crystallinity of the polyolefin, and water vapor barrier properties are exhibited. In addition, since the polyolefin-based resin has a polar group, tight adhesion to the vapor deposition layer 3 is exhibited, and therefore, it is not necessary to separately provide an adhesive layer. Accordingly, the proportion of paper in the packaging material is increased, and tearability is further improved.

Examples of the polar group include a carboxyl group, a salt of a carboxyl group, a carboxylic acid anhydride group, and a carboxylic acid ester.

As the first polyolefin-based resin, a product obtained by copolymerizing ethylene or propylene with an unsaturated carboxylic acid (an unsaturated compound having a carboxyl group, such as acrylic acid, methacrylic acid, or maleic anhydride) or an unsaturated carboxylic acid ester, a salt obtained by neutralizing a carboxylic acid with a basic compound, or the like may be used, and in addition to those, a product obtained by copolymerizing ethylene or propylene with vinyl acetate, an epoxy-based compound, a chlorine-based compound, a urethane-based compound, a polyamide-based compound, or the like may also be used.

Specific examples of the first polyolefin-based resin include a copolymer of an acrylic acid ester and maleic anhydride, an ethylene-vinyl acetate copolymer, and an ethylene-glycidyl methacrylate copolymer.

The sealant layer 4 may include other components in addition to the first polyolefin-based resin. Examples of the other components include a silane coupling agent, an organic titanate, a polyacrylic, a polyester, a polyurethane, a polycarbonate, a polyurea, a polyamide, a polyolefin-based emulsion, a polyimide, melamine, and phenol.

The content of the first polyolefin-based resin in the sealant layer 4 may be, for example, 50% by mass or more, may be 70% by mass or more, may be 90% by mass or more, or may be 100% by mass.

The thickness of the sealant layer 4 is 2 to 40 µm. When the thickness of the sealant layer 4 is 2 µm or more, a sealing strength sufficient for protecting the contents is obtained. When the thickness of the sealant layer 4 is 40 µm or less, the packaging material 10 has excellent tearability regardless of the direction of tear even when no notch is provided, and the quantity of plastic materials used can be sufficiently reduced. From a similar viewpoint, the thickness of the sealant layer 4 may be 10 µm or less or may be 5 µm or less. A packaging material 10 including a sealant layer 4 having such a thickness can be suitably used as a packaging material for packaging lightweight contents.

The sealant layer 4 may be a single layer or may be a multilayer composed of two or more layers.

Regarding a method for providing the sealant layer 4, the sealant layer 4 can be obtained by applying a coating liquid including a first polyolefin-based resin and a solvent on the vapor deposition layer 3 and drying the coating liquid.

Examples of the solvent that is included in the coating liquid of the sealant layer 4 include water, methyl alcohol, ethyl alcohol, isopropyl alcohol, n-propyl alcohol, n-butyl alcohol, n-pentyl alcohol, dimethyl sulfoxide, dimethylformamide, dimethylacetamide, toluene, hexane, heptane, cyclohexane, acetone, methyl ethyl ketone, diethyl ether, dioxane, tetrahydrofuran, ethyl acetate, and butyl acetate. These solvents may be used singly, or two or more kinds thereof may be used in combination. Among these, from the viewpoint of characteristics, methyl alcohol, ethyl alcohol, isopropyl alcohol, toluene, ethyl acetate, methyl ethyl ketone, and water are preferred. Furthermore, from an environmental viewpoint, methyl alcohol, ethyl alcohol, isopropyl alcohol, and water are preferred.

The melting point of the first polyolefin-based resin in the coating liquid is preferably 70 to 160°C and is more preferably 80 to 120°C. When the melting point is lower, there is an advantage that the kick-off temperature at the time of heat sealing can be lowered. When the melting point of the first polyolefin-based resin is high, there is a high risk that blocking may occur in a high-temperature environment. From the viewpoint of preventing blocking, it is desirable that the particle size is larger so as to make the contact area smaller. Although not particularly limited, the particle size may be specifically 1 nm or more, may be 0.1 µm or more, or may be 1 µm or less, 0.7 µm or less, or 0.5 µm or less.

The tensile strength at break of the packaging material 10 is 40 to 70 N/15 mm. When the tensile strength at break is 40 N/15 mm or more, the packaging material 10 is such that a resulting packaging bag has sufficient strength, and the occurrence of defects such as tearing during transportation and the like can be suppressed. When the tensile strength at break is 70 N/15 mm or less, the packaging material 10 has excellent tearability even when no notch is provided. The tensile strength at break is measured by pulling a test piece (length in the longitudinal direction: 100 mm, length in the transverse direction: 15 mm) cut out from the packaging material 10 in the longitudinal direction using a tensile tester (test length: 50 mm, tensile rate: 200 mm/min). Regarding the tensile strength at break of the packaging material 10, in a case where the fibers included in the paper base material 1 are non-oriented, it is desirable that the tensile strength at break in any direction in the packaging material 10 and the tensile strength at break in a direction perpendicular to the any direction fall in the above-described numerical value range. Regarding the tensile strength at break of the packaging material 10, in a case where the fibers included in the paper base material 1 are oriented, it is desirable that the tensile strength at break in the direction of orientation of the fibers of the paper base material 1 in the packaging material 10 and the tensile strength at break in a direction perpendicular to the direction of orientation fall in the above-described numerical value range.

### {Second embodiment}

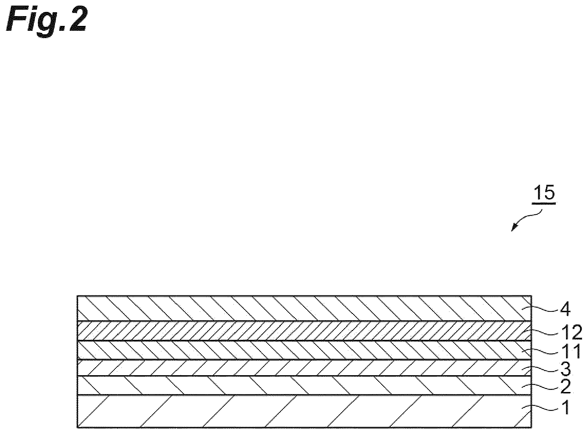

An easily openable packaging material according to a second embodiment will be described below. Points that are not described below are similar to the matters of the easily openable packaging material according to the first embodiment as long as there is no mismatch. FIG. 2 is a schematic cross-sectional view illustrating the packaging material according to the second embodiment. The packaging material 15 according to an embodiment has a laminated structure including a paper base material 1, an anchor coat layer 2, a vapor deposition layer 3, an overcoat layer 11, an adhesive layer 12, and a sealant layer 4 in this order.

### [Sealant layer]

The sealant layer 4 is provided on the surface of the adhesive layer 12 so as to be in contact with the adhesive layer 12. The sealant layer 4 includes a first polyolefin-based resin. Examples of the first polyolefin-based resin include a low-density polyethylene resin (LDPE), a medium-density polyethylene resin (MDPE), a high-density polyethylene resin (HDPE), a linear low-density polyethylene resin (LLDPE), an ethylene-vinyl acetate copolymer (EVA), a propylene homopolymer, an ethylene-propylene block copolymer, and an ethylene-propylene random copolymer. These can be used singly or in combination of two or more kinds thereof.

The thickness of the sealant layer 4 is 2 to 40 µm. From the viewpoint that the strength of the packaging material 15 tends to be improved, the thickness of the sealant layer 4 may be 10 µm or more, and from the viewpoint that tearability is more excellent, and the quantity of plastic materials used can be further reduced, the thickness may be 20 µm or less. The packaging material 15 including a sealant layer 4 having such a thickness can be suitably used as a packaging material for packaging heavyweight contents.

Examples of a method for forming the sealant layer 4 include an extrusion lamination method and a dry lamination method, and from the viewpoint of protecting the vapor deposition layer 3, the method for forming the sealant layer 4 is preferably a dry lamination method.

### [Overcoat layer]

The overcoat layer 11 is provided on the surface of the vapor deposition layer 3 so as to be in contact with the vapor deposition layer 3, and includes a second polyolefin-based resin having a polar group. When the packaging material 15 includes the overcoat layer 11, the gas barrier properties are further improved. In addition, since the tight adhesiveness between the overcoat layer 11 and the vapor deposition layer 3 and the tight adhesiveness between the overcoat layer 11 and the adhesive layer 12 are superior to the tight adhesiveness between the vapor deposition layer 3 and the adhesive layer 12, a packaging material 15 including the overcoat layer 11 has excellent tight adhesiveness. The packaging material 15 does not have to include the overcoat layer 11.

The second polyolefin-based resin may have at least one selected from the group consisting of a carboxyl group, a salt of a carboxyl group, a carboxylic acid anhydride group, and a carboxylic acid ester.

As the second polyolefin-based resin, a product obtained by copolymerizing ethylene or propylene with an unsaturated carboxylic acid (an unsaturated compound having a carboxyl group, such as acrylic acid or methacrylic acid) or an unsaturated carboxylic acid ester, a salt obtained by neutralizing a carboxylic acid with a basic compound, and the like may be used, and in addition to those, a product obtained by copolymerizing ethylene or propylene with vinyl acetate, an epoxy-based compound, a chlorine-based compound, a urethane-based compound, a polyamide-based compound, or the like may also be used.

Specific examples of the second polyolefin-based resin include a copolymer of an acrylic acid ester and maleic anhydride, an ethylene-vinyl acetate copolymer, and an ethylene-glycidyl methacrylate copolymer.

Such an overcoat layer 11 has excellent pliability, can suppress cracking of the vapor deposition layer 3 after being bent (after being folded), and at the same time, has excellent tight adhesiveness to the vapor deposition layer 3. Furthermore, since the overcoat layer 11 includes the second polyolefin-based resin, a dense film can be formed due to the crystallinity of the polyolefin, and water vapor barrier properties are exhibited. In addition, as the second polyolefin-based resin has a polar group, tight adhesion to the vapor deposition layer 3 is exhibited.

The overcoat layer 11 may include other components in addition to the second polyolefin-based resin. Examples of the other components include a silane coupling agent, an organic titanate, a polyacrylic, a polyester, a polyurethane, a polycarbonate, a polyurea, a polyamide, a polyolefin-based emulsion, a polyimide, melamine, and phenol.

The content of the second polyolefin-based resin in the overcoat layer 11 may be, for example, 50% by mass or more, may be 70% by mass or more, may be 90% by mass or more, or may be 100% by mass.

The thickness of the overcoat layer 11 may be, for example, 0.05 µm or more, may be 0.5 µm or more, may be 1 µm or more, may be 20 µm or less, may be 10 µm or less, or may be 5 µm or less. Furthermore, when the thickness of the overcoat layer 11 is 20 µm or less, tight adhesion to the vapor deposition layer and the gas barrier properties can be sufficiently exhibited while suppressing cost.

Regarding a method for providing the overcoat layer 11, the overcoat layer 11 can be obtained by applying a coating liquid including a second polyolefin-based resin and a solvent on the vapor deposition layer 3 and drying the coating liquid.

Examples of the solvent that is included in the coating liquid of the overcoat layer 11 include water, methyl alcohol, ethyl alcohol, isopropyl alcohol, n-propyl alcohol, n-butyl alcohol, n-pentyl alcohol, dimethyl sulfoxide, dimethylformamide, dimethylacetamide, toluene, hexane, heptane, cyclohexane, acetone, methyl ethyl ketone, diethyl ether, dioxane, tetrahydrofuran, ethyl acetate, and butyl acetate. These solvents may be used singly, or two or more kinds thereof may be used in combination. Among these, from the viewpoint of characteristics, methyl alcohol, ethyl alcohol, isopropyl alcohol, toluene, ethyl acetate, methyl ethyl ketone, and water are preferred. Furthermore, from an environmental viewpoint, methyl alcohol, ethyl alcohol, isopropyl alcohol, and water are preferred.

The melting point of the second polyolefin-based resin in the coating liquid is preferably 70 to 160°C, and more preferably 80 to 120°C. When the melting point of the second polyolefin-based resin is high, there is a high risk that blocking may occur in a high-temperature environment. From the viewpoint of preventing blocking, it is desirable that the particle size is larger so as to make the contact area smaller. Although not particularly limited, the particle size may be specifically 1 nm or more, may be 0.1 µm or more, or may be 1 µm or less, 0.7 µm or less, or 0.5 µm or less.

### [Adhesive layer]

The adhesive layer 12 is provided on the surface of the overcoat layer 11. As the adhesive layer 12, various adhesive layers can be used as long as they bring the overcoat layer 11 and the sealant layer 4 into close contact with each other, and examples thereof include a cured product of a urethane-based adhesive.

A urethane-based adhesive is a resin composition including a polyol having two or more hydroxyl groups in one molecule and an isocyanate compound having two or more isocyanate groups in one molecule. Urethane bonds are produced by curing a urethane-based adhesive. It is preferable that the urethane-based adhesive is a two-liquid curable type adhesive. The urethane-based adhesive may have gas barrier properties.

From the viewpoint of improving the adhesiveness of the adhesive layer 12, the thickness of the adhesive layer 12 is preferably 0.1 µm or more, and from the viewpoint that the quantity of plastic materials used is further reduced, the thickness is preferably 5 µm or less.

### <Packaging bag>

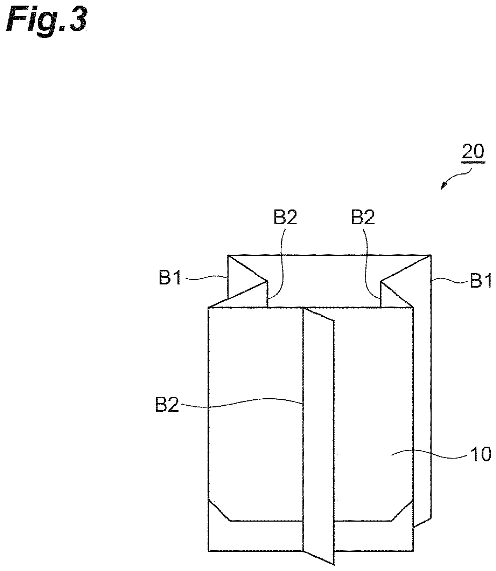

FIG. 3 is a perspective view illustrating a gusset bag 20 formed from the packaging material 10. A packaging bag is produced by sealing the opening at the top of the gusset bag 20. The gusset bag 20 has sites where the packaging material 10 is folded (folded parts B1 and B2). A folded part B1 is a site where the packaging material 10 is valley-folded as viewed from the innermost layer side, and a folded part B2 is a site where the packaging material 10 is mountain-folded as viewed from the innermost layer side.

The packaging bag may be formed into a bag shape by folding one sheet of packaging material in two such that the sealant layers 4 of the two parts face each other, subsequently appropriately folding the packaging material into a desired shape, and then heat-sealing the resultant, or may be formed into a bag shape by superposing two sheets of packaging materials such that the sealant layers 4 of the two sheets face each other, and then heat-sealing the packaging materials.

With regard to the packaging bag according to the present embodiment, the heat seal strength is not particularly limited. The heat seal strength can be changed as appropriate by changing the thickness of the sealant layer 4. For example, when accommodating lightweight contents, the heat seal strength may be 2 N or more or may be 10 N or less. In addition, when accommodating heavyweight contents, the heat seal strength is preferably 10 N or more.

The packaging bag can accommodate contents such as foods and pharmaceutical products as contents. Particularly for foods, the packaging bag is suitable for accommodating confectionery and the like. The packaging bag according to the present embodiment can maintain high gas barrier properties even when the packaging bag has a shape with folded parts.

In the present embodiment, a gusset bag has been mentioned as an example of the packaging bag; however, for example, a pillow bag, a three-sided sealed bag, or a standing pouch may also be produced by using the packaging material according to the above-described embodiment. The packaging bag may be formed from the packaging material 15.

### Examples

Hereinafter, the present disclosure will be described more specifically by way of Examples and Comparative Examples; however, the present disclosure is not intended to be limited to the following Examples.

### <Production of packaging material>

### (Example 1)

On the surface of paper (clay-coated paper, basis weight: 60 g/m², paper thickness: 55 µm, clay coat thickness: 5 µm), a coating liquid including a polyolefin-based resin having a carboxyl group and a salt of a carboxyl group (trade name: CHEMIPEARL S500, ionomer-based, particle size: < 0.5 µm, solvent: water and IPA, manufactured by Mitsui Chemicals, Inc.) was applied with a bar coater and dried in an oven to form an anchor coat layer (thickness: 3 µm). Subsequently, the AL vapor deposition was applied on the anchor coat layer to form an AL vapor deposition layer (thickness: 50 nm). On the vapor deposition layer, an unstretched polypropylene resin (CPP) film (thickness: 20 µm) as a sealant layer was dry laminated by using an adhesive (trade name: TAKELAC A525/TAKENATE A52, urethane-based two-liquid type, manufactured by Mitsui Chemicals, Inc.) to obtain a packaging material. The thickness of the adhesive layer was 2 µm. The weight of paper in the packaging material is shown in Table 1.

### (Example 2)

An anchor coat layer was formed on the surface of paper, and an AL vapor deposition layer was formed on the anchor coat layer, in the same manner as in Example 1. On the surface of the vapor deposition layer, a coating liquid including a polyolefin-based resin having a carboxyl group and a salt of a carboxyl group (trade name: CHEMIPEARL S500, ionomer-based, particle size: < 0.5 µm, solvent: water and IPA, manufactured by Mitsui Chemicals, Inc.) was applied with a bar coater and dried in an oven to form an overcoat layer (thickness: 3 µm). On the overcoat layer, an unstretched polypropylene resin (CPP) film (thickness: 20 µm) as a sealant layer was dry laminated by using an adhesive (trade name: TAKELAC A525/TAKENATE A52, urethane-based two-liquid type, manufactured by Mitsui Chemicals, Inc.) to obtain a packaging material. The thickness of the adhesive layer was 2 µm. The weight of paper in the packaging material is shown in Table 1.

### (Example 3)

An anchor coat layer was formed on the surface of paper, and an AL vapor deposition layer was formed on the anchor coat layer, in the same manner as in Example 1. On the surface of the vapor deposition layer, a coating liquid including a polyolefin-based resin having a carboxyl group and a salt of a carboxyl group (trade name: CHEMIPEARL S500, ionomer-based, particle size: < 0.5 µm, solvent: water and IPA, manufactured by Mitsui Chemicals, Inc.) was applied with a bar coater and dried in an oven, and a sealant layer (thickness: 3 µm) was formed to obtain a packaging material. The weight of paper in the packaging material is shown in Table 1.

### (Example 4)

A packaging material was obtained in the same manner as in Example 1, except that an anchor coat layer was formed by using a polyvinyl alcohol-based resin (degree of saponification: 98%, degree of polymerization: 500) instead of the coating liquid including a polyolefin-based resin having a carboxyl group and a salt of a carboxyl group. The weight of paper in the packaging material is shown in Table 1.

### (Example 5)

A packaging material was obtained in the same manner as in Example 1, except that a sealant layer was formed by using a linear low-density polyethylene resin (LLDPE) film (thickness: 20 µm) instead of the unstretched polypropylene resin (CPP) film. The weight of paper in the packaging material is shown in Table 2.

### (Example 6)

A packaging material was obtained in the same manner as in Example 1, except that a sealant layer was formed by using a linear low-density polyethylene resin (LLDPE) film (thickness: 40 µm) instead of the unstretched polypropylene resin (CPP) film. The weight of paper in the packaging material is shown in Table 2.

### (Comparative Example 1)

A packaging material was obtained in the same manner as in Example 1, except that the thickness of the unstretched polypropylene resin (CPP) was set to 60 µm. The weight of paper in the packaging material is shown in Table 2.

### (Comparative Example 2)

A packaging material was obtained in the same manner as in Example 1, except that a sealant layer was formed by using a polyethylene terephthalate (PET) film (thickness: 30 µm) instead of the unstretched polypropylene resin (CPP) film. The weight of paper in the packaging material is shown in Table 2.

### (Example 7)

A packaging material was obtained in the same manner as in Example 1, except that the vapor deposition layer was formed using silica. The weight of paper in the packaging material is shown in Table 3.

### (Example 8)

A packaging material was obtained in the same manner as in Example 1, except that the vapor deposition layer was formed using alumina. The weight of paper in the packaging material is shown in Table 3.

### (Example 9)

A packaging material was obtained in the same manner as in Example 1, except that paper (clay-coated paper, basis weight: 50 g/m², paper thickness: 45 µm, clay coat thickness: 5 µm) was used as the paper. The weight of paper in the packaging material is shown in Table 3.

### (Example 10)

A packaging material was obtained in the same manner as in Example 1, except that the anchor coat layer was formed by using a polyurethane-based resin instead of the coating liquid including a polyolefin-based resin having a carboxyl group and a salt of a carboxyl group. The weight of paper in the packaging material is shown in Table 3.

### (Example 11)

A packaging material was obtained in the same manner as in Example 3, except that the anchor coat layer was formed by using a polyurethane-based resin instead of the coating liquid including a polyolefin-based resin having a carboxyl group and a salt of a carboxyl group. The weight of paper in the packaging material is shown in Table 3.

### (Comparative Example 3)

A packaging material was obtained in the same manner as in Example 10, except that the thickness of the unstretched polypropylene resin (CPP) was set to 60 µm. The weight of paper in the packaging material is shown in Table 3.

### <Evaluation of ease of tearing>

A three-sided pouch (size: 10 centimeters on each side, seal width: 5 mm) was produced by sticking each of the packaging materials according to the Examples and Comparative Examples such that the sealant layers faced each other. Five evaluators were randomly selected from 10 male evaluators and 10 female evaluators, and the selected evaluators tore the three-sided pouch and evaluated the ease of tearing according to the following criteria. The directions in which the three-sided pouch was torn were a direction (MD) along the flow direction in the paper-making process for paper and a direction (CD) perpendicular to the flow direction in the paper-making process for paper. The poorest evaluation result among the evaluation results given by the selected evaluators was taken as the evaluation result for the packaging material. The results are shown in Tables 1 to 3.

### (Evaluation criteria)

A: Easily torn and no elongation in the sealant layer is confirmed
B: Tearable but elongation of the sealant layer is confirmed
C: Not tearable

### <Measurement of tensile strength at break>

A test piece was cut out from each of the packaging materials according to the Examples and Comparative Examples. Regarding the size of the test piece, the length in the direction (MD) along the flow direction in the paper-making process for paper was set to 100 mm, and the length in the direction (CD) perpendicular to the flow direction in the paper-making process for paper was set to 15 mm. The test piece was pulled in the longitudinal direction (MD) using a tensile tester, and the tensile strength at break was measured. The test length was set to 50 mm, and the tensile rate was set to 200 mm/min. Measurement was performed for five test pieces. The average value of the measured values obtained from the five test pieces was designated as the tensile strength at break in the MD of the packaging material. In addition, the tensile strength at break was measured also for test specimens in which the length in a direction (CD) perpendicular to the flow direction in the paper-making process for paper was set to 100 mm, and the length in a direction (MD) along the flow direction in the paper-making process for paper was set to 15 mm, in the same manner as in the case of the tensile strength at break in the MD, and this was designated as tensile strength at break in the CD. The results are shown in Tables 1 to 3.

### <Measurement of water vapor permeability>

The water vapor permeability of the packaging materials according to Examples and Comparative Examples was measured by a MOCON method. The measurement conditions were set to a temperature of 40°C and a relative humidity of 90%. Regarding the measurement apparatus, a PERMATRAN (trade name, manufactured by MOCON, Inc.) was used. While rolling a 600 g roller at a speed of 300 mm/min, the packaging material was folded 180 degrees such that the paper base material was on the inside, and the water vapor permeability of the packaging material after being opened was measured in the same manner. The results are expressed in the unit of [g/m²·day] in Tables 1 to 3.

**[Table 1]**

| | | | Example 1 | Example 2 | Example 3 | Example 4 |
|---|---|---|---|---|---|---|
| Layer configuration | Paper base material | | Clay-coated paper | Clay-coated paper | Clay-coated paper | Clay-coated paper |
| | Anchor coat layer | | Polyolefin-based resin | Polyolefin-based resin | Polyolefin-based resin | Polyvinyl alcohol-based resin |
| | Vapor deposition layer | | Al | Al | Al | Al |
| | Overcoat layer | | - | Polyolefin-based resin | - | - |
| | Adhesive layer | | Urethane curing adhesive | Urethane curing adhesive | - | Urethane curing adhesive |
| | Sealant layer | | CPP (thickness: 20 µm) | CPP (thickness: 20 µm) | Polyolefin-based resin (thickness: 3 µm) | CPP (thickness: 20 µm) |
| Evaluation | Ease of tearing | MD | A | A | A | A |
| | | CD | A | A | A | A |
| | Tensile strength at break [N/15 mm] | MD | 63 | 60 | 52 | 62 |
| | | CD | 61 | 63 | 50 | 64 |
| | Paper ratio [% by mass] | | 65 | 63 | 83 | 65 |
| | Water vapor barrier properties | Initial | 2.4 | 1.9 | 4.0 | 2.0 |
| | | After being folded | 2.6 | 2.1 | 5.2 | 2.5 |

**[Table 2]**

| | | | Example 5 | Example 6 | Comparative Example 1 | Comparative Example 2 |
|---|---|---|---|---|---|---|
| Layer configuration | Paper base material | | Clay-coated paper | Clay-coated paper | Clay-coated paper | Clay-coated paper |
| | Anchor coat layer | | Polyolefin-based resin | Polyolefin-based resin | Polyolefin-based resin | Polyolefin-based resin |
| | Vapor deposition layer | | Al | Al | Al | Al |
| | Overcoat layer | | - | - | - | - |
| | Adhesive layer | | Urethane curing adhesive | Urethane curing adhesive | Urethane curing adhesive | Urethane curing adhesive |
| | Sealant layer | | LLDPE (thickness: 20 µm) | LLDPE (thickness: 40 µm) | CPP (thickness: 60 µm) | PET (thickness: 30 µm) |
| Evaluation | Ease of tearing | MD | A | B | C | C |
| | | CD | A | B | C | C |
| | Tensile strength at break [N/15 mm] | MD | 63 | 65 | 75 | 83 |
| | | CD | 60 | 67 | 77 | 80 |
| | Paper ratio [% by mass] | | 65 | 52 | 44 | 58 |
| | Water vapor barrier properties | Initial | 2.6 | 2.3 | 1.9 | 2.1 |
| | | After being folded | 2.9 | 2.4 | 1.9 | 2.4 |

**[Table 3]**

| | | | Example 7 | Example 8 | Example 9 | Example 10 | Example 11 | Comparative Example 3 |
|---|---|---|---|---|---|---|---|---|
| Layer configuration | Paper base material | | Clay-coated paper | Clay-coated paper | Clay-coated paper | Clay-coated paper | Clay-coated paper | Clay-coated paper |
| | Anchor coat layer | | Polyolefin-based resin | Polyolefin-based resin | Polyolefin-based resin | Polyurethane-based resin | Polyurethane-based resin | Polyurethane-based resin |
| | Vapor deposition layer | | SiOx | AlOx | Al | Al | Al | Al |
| | Overcoat layer | | - | - | - | - | - | - |
| | Adhesive material layer | | Urethane curing adhesive | Urethane curing adhesive | Urethane curing adhesive | Urethane curing adhesive | - | Urethane curing adhesive |
| | Sealant layer | | CPP (thickness: 20 µm) | CPP (thickness: 20 µm) | CPP (thickness: 20 µm) | CPP (thickness: 20 µm) | Polyolefin-based resin (thickness: 3 µm) | CPP (thickness: 60 µm) |
| Evaluation | Ease of tearing | MD | A | A | A | A | A | C |
| | | CD | A | A | A | A | A | C |
| | Tensile strength at break [N/15 mm] | MD | 60 | 61 | 55 | 60 | 51 | 79 |
| | | CD | 61 | 63 | 54 | 64 | 53 | 80 |
| | Paper ratio [% by mass] | | 65 | 65 | 60 | 65 | 83 | 44 |
| | Water vapor barrier properties | Initial | 3.1 | 4.3 | 2.5 | 2.3 | 4.9 | 2.6 |
| | | After being folded | 5.5 | 5.1 | 2.9 | 15.2 | 35.1 | 5.0 |

The gist of the present disclosure resides in the following items [1] to [9].
[1] An easily openable packaging material having a laminated structure including, in the following order:
   a paper base material;
   an anchor coat layer;
   a vapor deposition layer of a metal or a metal oxide; and
   a sealant layer,
   in which a weight of the paper base material is 50% by mass or more based on an entirety of the packaging material,
   a thickness of the sealant layer is 2 to 40 µm,
   the sealant layer includes a first polyolefin-based resin, and
   a tensile strength at break is 40 to 70 N/15 mm.
[2] The easily openable packaging material according to [1], in which the first polyolefin-based resin has at least one selected from the group consisting of a carboxyl group and a salt of a carboxyl group.
[3] The easily openable packaging material according to [1] or [2], in which a thickness of the sealant layer is 2 to 20 µm.
[4] The easily openable packaging material according to any one of [1] to [3], further including an adhesive layer between the vapor deposition layer and the sealant layer.
[5] The easily openable packaging material according to [4], further including an overcoat layer between the vapor deposition layer and the adhesive layer,
   in which the overcoat layer includes a second polyolefin-based resin having at least one selected from the group consisting of a carboxyl group and a salt of a carboxyl group.
[6] The easily openable packaging material according to any one of [1] to [5], in which the anchor coat layer includes a third polyolefin-based resin having at least one selected from the group consisting of a carboxyl group and a salt of a carboxyl group.
[7] The easily openable packaging material according to any one of [1] to [5], in which the anchor coat layer includes a polyvinyl alcohol-based resin.
[8] A packaging bag including the easily openable packaging material according to any one of [1] to [7].
[9] The packaging bag according to [8], having a folded part.

### Reference Signs List

1: paper base material, 2: anchor coat layer, 3: vapor deposition layer, 4: sealant layer, 10, 15: packaging material, 11: overcoat layer, 12: adhesive layer, 20: gusset bag, B1, B2: folded part.

## Claims

1. An easily openable packaging material having a laminated structure comprising, in the following order:
a paper base material;
an anchor coat layer;
a vapor deposition layer of a metal or a metal oxide; and
a sealant layer,
wherein a weight of the paper base material is 50% by mass or more based on an entirety of the packaging material,
a thickness of the sealant layer is 2 to 40 µm,
the sealant layer includes a first polyolefin-based resin, and
a tensile strength at break is 40 to 70 N/15 mm.

2. The easily openable packaging material according to claim 1, wherein the first polyolefin-based resin has at least one selected from the group consisting of a carboxyl group and a salt of a carboxyl group.

3. The easily openable packaging material according to claim 1, wherein a thickness of the sealant layer is 2 to 20 µm.

4. The easily openable packaging material according to claim 1, further comprising an adhesive layer between the vapor deposition layer and the sealant layer.

5. The easily openable packaging material according to claim 4, further comprising an overcoat layer between the vapor deposition layer and the adhesive layer,
wherein the overcoat layer includes a second polyolefin-based resin having at least one selected from the group consisting of a carboxyl group and a salt of a carboxyl group.

6. The easily openable packaging material according to claim 1, wherein the anchor coat layer includes a third polyolefin-based resin having at least one selected from the group consisting of a carboxyl group and a salt of a carboxyl group.

7. The easily openable packaging material according to claim 1, wherein the anchor coat layer includes a polyvinyl alcohol-based resin.

8. A packaging bag comprising the easily openable packaging material according to any one of claims 1 to 7.

9. The packaging bag according to claim 8, having a folded part.
